# EUROPÄISCHE PATENTSCHRIFT

(11) **EP 3 336 730 B1**
(45) Veröffentlichungstag und Bekanntmachung des Hinweises auf die Patenterteilung: **22.09.2021**
(21) Anmeldenummer: 17204564.3
(22) Anmeldetag: 30.11.2017
(51) Int. Cl.: G06F 9/455, G06F 8/10, G06F 11/36, G06F 9/54, G05B 17/00, G05B 17/02, G06F 30/20, G06F 117/08

(54) **VERFAHREN ZUM ERSTELLEN EINES MIT EINEM SIMULATIONSGERÄT KOMPATIBLEN MODELLS**
METHOD FOR CREATING A MODEL COMPATIBLE WITH A SIMULATION APPARATUS
PROCÉDÉ DE RÉALISATION D'UN MODÈLE COMPATIBLE AVEC UN SIMULATEUR

(30) Priorität: 16.12.2016 DE 102016124623
(43) Veröffentlichungstag der Anmeldung: 20.06.2018
(73) Patentinhaber: dSPACE digital signal processing and control engineering GmbH, 33102 Paderborn (DE)
(72) Erfinder: Pillekeit, Andreas, 44137 Dortmund (DE)

(56) Entgegenhaltungen:
- EP-A1- 2 801 872
- EP-A1- 3 001 313
- EP-A2- 2 871 544

## Beschreibung

Die vorliegende Erfindung betrifft die Entwicklung von Steuergeräten, wie sie z. B. in der Automobilindustrie oder in der Luftfahrtindustrie zur Steuerung von technischen Systemen, wie z. B. Motoren oder Bremsen, verwendet werden. Insbesondere betrifft die vorliegende Erfindung Simulationsgeräte, die im Entwicklungsprozess des Steuergeräts verwendet werden.

Die Entwicklung von Steuergeräten ist zu einem hochkomplexen Prozess geworden. So sollen neue Steuergeräte bzw. neue Steuerfunktionen so früh wie möglich im Entwicklungsprozess getestet werden, um die generelle Funktionalität zu überprüfen und die weitere Entwicklungsrichtung vorzugeben. Gegen Ende des Entwicklungsprozesses ist es wichtig, das schon weit entwickelte Steuergerät möglichst umfassend zu testen, um aufgrund der Testergebnisse notwendige Modifikationen vorzunehmen, bevor das Steuergerät in Benutzung bzw. in Serienfertigung geht, so dass es im späteren Betrieb unter allen Umständen wie gewünscht arbeitet. Drei beispielhafte Schritte des Entwicklungsprozesses werden nachfolgend beschrieben.

Zu einem recht späten Stadium des Entwicklungsprozesses kommen sog. Hardware-in-the-Loop-Simulatoren (HIL-Simulatoren) zum Einsatz. Solche HIL-Simulatoren enthalten ein Modell des zu steuernden technischen Systems, wobei das Modell in Software vorliegt. Der HIL-Simulator enthält weiterhin eine Eingabe/Ausgabe-Schnittstelle, an die das schon weit entwickelte, bereits in Hardware gegenständlich vorhandene Steuergerät, auch als gerätemäßige Implementierung des Steuergeräts bezeichnet, angeschlossen werden kann. In verschiedenen Simulationsdurchläufen kann nun die Funktionalität des Steuergeräts getestet werden, wobei die Reaktionen des Modells des zu steuernden technischen Systems auf die Signale des Steuergeräts sowie die Reaktionen des Steuergeräts auf von dem Modell des zu steuernden technischen Systems vorgegebene Ereignisse beobachtet werden können. Dabei können sowohl der normale Betrieb als auch Fehler in dem zu steuernden technischen System als auch Fehler in dem Steuergerät als auch Fehler in der Kommunikation zwischen Steuergerät und zu steuerndem System, wie z.B. Kabelbrücke, als auch Fehler in der Stromversorgung, wie z.B. Kurzschlüsse, simuliert werden. Der HIL-Simulator ist ein Beispiel eines für die Steuergerätentwicklung eingerichteten Simulationsgeräts.

Demgegenüber ist das sogenannte Rapid Control Prototyping (RCP) ein Entwicklungsschritt, der mehr am Anfang des Entwicklungsprozesses steht. Beim RCP kommt das Simulationsgerät auf Seiten des Steuergeräts zum Einsatz. Das Simulationsgerät enthält ein Testmodell des Steuergeräts. Aufgrund des frühen Entwicklungsstadiums ist das Testmodell des Steuergeräts noch recht rudimentär im Vergleich zu dem späteren finalen Steuergerät. Auch ist normalerweise noch keine Hardware-Implementierung des Steuergeräts vorhanden, vielmehr ist das in dem Simulationsgerät vorhandene Testmodell des Steuergeräts ein Software-Modell. Das Simulationsgerät kann über eine Eingabe/Ausgabe-Schnittstelle mit dem zu steuernden technischen System selbst oder mit dem bisher vorhandenen Steuergerät für das zu steuernde technische System verbunden werden. Im ersten Fall besteht eine direkte Verbindung zwischen dem zu testenden Steuergerät, in der Form eines Software-Modells, und dem gegenständlich vorhandenen, zu steuernden technischen System. Im zweiten Fall ist das bisher vorhandene Steuergerät das durch das RCP-Simulationsgerät zu steuernde technische System. Diese Steuerung des bisher vorhandenen Steuergeräts führt zu einer Modifikation der Steuerverfahren des bisher vorhandenen Steuergeräts, wodurch neue Steuer-Funktionalität mittels des von außen angeschlossenen RCP-Simulationsgeräts getestet werden kann. Dieser Vorgang kann auch als "Bypassing" bezeichnet werden. Das RCP-Simulationsgerät ist ein weiteres Beispiel eines für die Steuergerätentwicklung eingerichteten Simulationsgeräts.

In einer noch früheren Phase der Steuergerätentwicklung kann die grundlegende Funktionalität von Steuer- und Regelungsverfahren rein rechnergestützt evaluiert werden. Zu diesem Zweck wird ein Basistestmodell des Steuergeräts in Software erstellt, das ohne physikalische Anbindung an das zu steuernde technische System getestet werden kann. Der Test kann in dieser Phase so durchgeführt werden, dass das Verhalten des Basistestmodells als solches, d.h. die internen Zustände des Basistestmodells, oder das Verhalten des Basistestmodells im Zusammenspiel mit einem rechnergestützten Modell der späteren Umgebung des Steuergeräts beobachtet und evaluiert wird. Für die Erstellung von Basistestmodellen von Steuergeräten und von den genannten Modellen der Umgebung der Steuergeräte gibt es rechnergestützte Entwicklungsumgebungen, wie z.B. Simulink ®. Solche Entwicklungsumgebungen erlauben auch ein Testen der Basistestmodelle in der modellierten Umgebung. Für detaillierte Tests von Basistestmodellen in modellierten Umgebungen gibt es wiederum spezialisierte Produkte, wie z.B. VEOS ®. Mit solchen Entwicklungsumgebungen ausgestattete Rechner sind weitere Beispiele von für die Steuergerätentwicklung eingerichteten Simulationsgeräten. Die genannten Basistestmodelle von Steuergeräten werden auch als virtuelle Steuergeräte, sogenannte "Virtual Electronic Control Units" (V-ECUs) bezeichnet, insbesondere im Bereich der Steuergerätentwicklung in der Automobilindustrie. Neben dem Testen der grundlegenden Funktionalität von Steuer- und Regelungsverfahren in einer frühen Phase der Steuergerätentwicklung können Basistestmodelle auch dazu verwendet werden, gewisse Tests von HIL-Simulationen vorzuverlagern und so den Testumfang während der HIL-Testphase gering zu halten.

EP 3 001 313 A1 offenbart ein Verfahren zur Ausführung eines ersten Anwendungsprogramms eines ersten Steuergerätes auf einem Computer, wobei mittels des ersten Anwendungsprogramms Funktionen zur Steuerung von Aktoren und/oder Sensoren und/oder Funktionen zur Verarbeitung und/oder Bereitstellung von Daten von Aktoren und/oder Sensoren ausgeführt werden, wobei das erste Steuergerät eine Steuergeräte-Hardware mit mindestens einem ersten Rechenkern eines ersten Rechenkern-Typs aufweist, der Computer eine Computer-Hardware mit mindestens einem zweiten Rechenkern eines zweiten Rechenkern-Typs aufweist, wobei sich der erste Rechenkern-Typ und der zweite Rechenkern-Typ zumindest hinsichtlich des verwendeten Befehlssatzes unterscheiden, ein Quellcode eines Steuergeräte-Betriebssystems vorliegt, wobei durch das Steuergeräte-Betriebssystem eine erste Schnittstelle zwischen der Steuergeräte-Hardware und dem ersten Anwendungsprogramm des Steuergerätes ausgebildet wird, ein Quellcode des ersten Anwendungsprogramms vorliegt, der Quellcode des Steuergeräte-Betriebssystems und der Quellcodes des ersten Anwendungsprogramms zur Ausführbarkeit auf dem zweiten Rechenkern-Typ kompiliert werden, wobei durch die Kompilierung ein erstes virtuelles Steuergeräte-Betriebssystem und ein erstes virtuelles Anwendungsprogramm erzeugt werden.

In den genannten Simulationsgeräten wird ein Modell eines zu steuernden technischen Systems mit einem Steuergerät verbunden bzw. ein Modell eines Steuergeräts, was beispielsweise auch ein Basistestmodell sein kann, mit einem zu steuernden technischen Systems verbunden bzw. ein Modell eines Steuergeräts mit einem Modell eines zu steuernden technischen Systems, auch als Umgebungsmodell(e) bezeichnet, verbunden. Dies bedeutet normalerweise erheblichen Konfigurationsaufwand für die Vorbereitung einer Simulation. Der Konfigurationsaufwand wird weiterhin dadurch erhöht, dass in vielen Simulationen nicht nur die genannten jeweils zwei Geräte / Modelle miteinander verbunden werden, sondern weitere Modelle eingebunden werden. Ein Beispiel ist ein Test eines Motorsteuergeräts, welches an einen HIL-Simulator angeschlossen ist, auf dem ein Modell des Motors ausgeführt wird, mit dem das Motorsteuergerät interagiert. Daneben können auf dem HIL-Simulator ein oder mehrere weitere Modelle von technischen Systemen ausgeführt werden, z.B. ein Modell eines Getriebes, wobei die Interaktion mit dem/den weiteren Modell(en) in die Simulation einfließt. Neben dem Aufwand für die Konfiguration steigt durch die oft gewünschte Berücksichtigung vieler Modelle die Gefahr, dass manche Modelle nicht mit dem Simulationsgerät kompatibel sind und daher möglicherweise nicht eingebunden werden können.

Demzufolge wäre es wünschenswert, die Möglichkeiten zur Einbindung von Modellen technischer Systeme zu erweitern und einen effektiven Zugriff auf die Modelle technischer Systeme während der Simulation zu ermöglichen.

Beispielhafte Ausführungsformen der Erfindung umfassen ein Verfahren zum Erstellen eines mit einem Simulationsgerät kompatiblen Modells eines technischen Systems gemäß Anspruch 1, ein Verfahren zum Testen eines Steuergeräts mit einem Hardware-in-the-Loop-Simulator gemäß Anspruch 6 und eine mit einem Hardware-in-the-Loop-Simulator kompatible Container-Einheit gemäß Anspruch 11. Weitere Ausführungsformen sind in den abhängigen Ansprüchen gegeben.

Beispielhafte Ausführungsformen der Erfindung umfassen ein Verfahren zum Erstellen eines mit einem Simulationsgerät kompatiblen Modells eines technischen Systems, wobei das Simulationsgerät ein für die Steuergerätentwicklung eingerichtetes Simulationsgerät ist und das kompatible Modell auf dem Simulationsgerät ausführbar ist, wobei das Verfahren die folgenden Schritte aufweist: (a) Bereitstellen eines mit dem Simulationsgerät inkompatiblen Modells des technischen Systems; (b) Bereitstellen einer virtuellen Ausführungsumgebung, wobei das mit dem Simulationsgerät inkompatible Modell des technischen Systems in der virtuellen Ausführungsumgebung ausführbar ist; und (c) Einkapseln des mit dem Simulationsgerät inkompatiblen Modells des technischen Systems und der virtuellen Ausführungsumgebung in eine kompatible Container-Einheit, die das kompatible Modell des technischen Systems bildet, wobei das inkompatible Modell des technischen Systems über die kompatible Container-Einheit und die virtuelle Ausführungsumgebung auf dem Simulationsgerät ansprechbar ist.

Das erfindungsgemäße Verfahren ermöglicht es, mit einem bestimmten Simulationsgerät inkompatible Modelle technischer Systeme, die z.B. als Umgebungsmodelle in eine Simulation eingebunden werden sollen, so anzupassen bzw. aufzubereiten, dass sie mit dem Simulationsgerät kompatibel werden und Teil einer Simulation in der Steuergerätentwicklung werden können. Auf diese Weise ist der Fundus an Modellen technischer Systeme, die für eine bestimmte Simulation zur Verfügung stehen, nicht mehr auf inhärent kompatible Modelle beschränkt. Die Menge der einbindbaren Modelle technischer Systeme wird um vorhandene, aber in ihrer ursprünglichen Form inkompatible Modelle erweitert.

Modelle technischer Systeme können aus vielerlei Gründen mit einem bestimmten Simulationsgerät inkompatibel sein. Beispielsweise kann ein Modell in vorkompilierter Form vorliegen und deshalb nur auf einem bestimmten Betriebssystem bzw. auf einer bestimmten Art von Betriebssystem ausführbar sein. Wenn das Simulationsgerät dann kein solches Betriebssystem aufweist, ist das Modell inkompatibel mit dem Simulationsgerät. Analoges kann auch für Modelle gelten, die zur Ausführung einen bestimmten Prozessor bzw. eine bestimmte Art von Prozessor und/oder einen bestimmten Speicher bzw. eine bestimmte Art von Speicher benötigen. Durch das Bereitstellen einer virtuellen Ausführungsumgebung und das Einkapseln des inkompatiblen Modells und der virtuellen Ausführungsumgebung in eine kompatible Container-Einheit wird das ursprünglich inkompatible Modell auf dem Simulationsgerät ausführbar und ansprechbar. Das kompatible Modell des technischen Systems ist mit den Gegebenheiten des Simulationsgeräts, wie z.B. Betriebssystem, Prozessor und Speicher, kompatibel.

Durch das erfindungsgemäße Verfahren werden inkompatible Modelle technischer Systeme für die Ausführung auf einem Simulationsgerät kompatibel gemacht. Für die Vorbereitung einer Simulation bzw. eines Tests kann das eine erhebliche Verringerung des Aufwands bzw. der Vorbereitungszeit bedeuten. Vorkompilierte und/oder verschlüsselte Modelle technischer Systeme, die nur in ausgewählten Ausführungsumgebungen ausführbar sind, sind weit verbreitet. Dies liegt unter anderem daran, dass viele Hersteller bestimmter Komponenten, wie z.B. Zulieferer in der Automobilindustrie, nur vorkompilierte und/oder verschlüsselte Modelle ihrer Komponenten für Simulationszwecke zur Verfügung stellen. Auf diese Weise wollen die Hersteller der Komponenten die Details ihrer Produkte schützen. Durch das erfindungsgemäße Verfahren ist es nun nicht mehr nötig, anstatt eines inkompatiblen Modells auf aufwändige Weise ein kompatibles Modell für eine bestimmte Simulation anfertigen zu lassen. Vielmehr kann das inkompatible Modell in eine kompatible Container-Einheit eingekapselt werden und über die virtuelle Ausführungsumgebung ausgeführt werden. Eine Neukompilierung eines höhersprachigen Modells des technischen Systems, welche oft nur der Hersteller der Komponente leisten kann, kann überflüssig gemacht werden. Der Aufwand und der zeitliche Rahmen für die Vorbereitung einer Simulation können somit verringert werden.

Gemäß der Erfindung ist das für die Steuergerätentwicklung eingerichtete Simulationsgerät ein HIL-Simulator.

Gemäß einer weiteren Ausführungsform ist die kompatible Container-Einheit gemäß einer Schnittstellen-Spezifikation, die standardisiert sein kann, ausgebildet. Durch das Bereitstellen einer (standardisierten) Schnittstelle (Interface) kann die kompatible Container-Einheit auf dem Simulationsgerät bequem angesprochen werden und während der Vorbereitung der Simulation bequem konfiguriert werden. Eine vergleichsweise unkomplizierte Einbindung der kompatiblen Container-Einheit, welche das kompatible Modell des technischen Systems bildet, kann erreicht werden. Für die kompatible Container-Einheit kann ein allgemein spezifiziertes oder standardisiertes Container-Format, insbesondere ein standardisiertes Container-Datei-Format, vorgesehen sein. Gemäß einer weiteren Ausführungsform kann die kompatible Einheit gemäß dem Functional Mock-up Interface (FMI) ausgebildet sein. Diese Schnittstelle ist auf die Kopplung von Simulationssoftware, insbesondere von Software-Modellen, spezialisiert. Die Spezifikation zu dieser Schnittstelle kann unter https://svn.modelica.org/fmi/branches/public/specifications/v2.0/FMI_for_ModelExc hange_and_CoSimulation_v2.0.pdf eingesehen werden. Diese erfindungsgemäße Ausführungsform bezieht sich auf Schnittstellen, die gemäß der Version 2.0 vom 25. Juli 2014 oder Version 1.0 vom 26. Januar 2010 (FMI for Model Exchange: https://svn.modelica.org/fmi/branches/public/specifications/v1.0/FMI_for_ModelExc hange_v1.0.pdf) bzw. 12. Oktober 2010 (FMI for Co-Simulation: https://svn.modelica.org/fmi/branches/public/specifications/v1.0/FMI_for_CoSimula tion_v1.0.pdf) ausgeprägt sind und auf alle vorhergegangenen und/oder zukünftigen Spezifikationsversionen.

Gemäß einer weiteren Ausführungsform umfasst das Einkapseln in die kompatible Container-Einheit ein Koppeln der kompatiblen Container-Einheit und der virtuellen Ausführungsumgebung mittels einer Schnittstellen-Brücke. Auf diese Weise kann die virtuelle Ausführungsumgebung, mit der das inkompatible Modell interagiert, effektiv an die kompatible Container-Einheit angeschlossen werden. Die Schnittstellen-Brücke kann man als Kopplung der Außenschnittstelle der virtuellen Ausführungsumgebung mit der Innenschnittstelle der kompatiblen Container-Einheit betrachten. Somit kann ein effektives Einkapseln mitsamt effektiver Einbindung erreicht werden. Die Schnittstellen-Brücke ist in der Lage, Aufrufe zwischen der Ausführungsumgebung des Simulationsgeräts, wie z.B. dem Betriebssystem des Simulationsgeräts, und der virtuellen Ausführungsumgebung umzusetzen.

Gemäß einer weiteren Ausführungsform umfasst die virtuelle Ausführungsumgebung ein Betriebssystem, auf dem das mit dem Simulationsgerät inkompatible Modell des technischen Systems ausführbar ist. Das mit dem Simulationsgerät inkompatible Modell des technischen Systems ist ein mit dem Betriebssystem der virtuellen Ausführungsumgebung kompatibles Modell. Somit kann durch das Betriebssystem der virtuellen Ausführungsumgebung der Schritt zwischen Inkompatibilität und Kompatibilität gemacht werden. Der Begriff virtuelle Ausführungsumgebung bezeichnet allgemein eine Software-Umgebung, die sich aber dem inkompatiblen Modell gegenüber wie eine zu dem Modell kompatible Hardware anfühlt und so ein Ausführen des inkompatiblen Modells ermöglicht.

Gemäß einer weiteren Ausführungsform weist die virtuelle Ausführungsumgebung weiterhin einen Prozessor und/oder ein Speichermedium und/oder einen lokalen Lizenzserver auf. In anderen Worten, die virtuelle Ausführungsumgebung weist mindestens eine der Komponenten Prozessor, Speichermedium und lokaler Lizenzserver auf. Als Teil der virtuellen Ausführungsumgebung sind auch diese Komponenten virtuell, d.h. in Software, vorhanden. Für das ausgeführte inkompatible Modell des technischen Systems sehen diese Komponenten jedoch wie entsprechende Hardware-Komponenten aus und verhalten sich dementsprechend bei der Interaktion. Es ist auch möglich, dass der virtuellen Ausführungsumgebung auf dem Simulationsgerät ein oder mehrere Prozessoren bzw. Prozessorkerne und/oder dezidierte Speicherbausteine bzw. Speicherbereiche zugeordnet sind. Auch wenn diese Komponenten Teil der Hardware des Simulationsgeräts sind, werden sie durch die Zuordnung zu der virtuellen Ausführungsumgebung für die Simulation Teil der virtuellen Ausführungsumgebung.

Gemäß einer weiteren Ausführungsform weist die virtuelle Ausführungsumgebung weiterhin zur Ausführung des inkompatiblen Modells benötigte, aber auf dem Simulationsgeräte nicht vorhandene Hardware-Komponenten und/oder Software-Komponenten auf. Diese nicht von vornherein auf dem Simulationsgerät vorhandenen Hardware-Komponenten können z.B. ein Prozessor (mit einem speziellen Instruktionssatz) und/oder ein Speichermedium sein, die emuliert werden. Die nicht von vornherein auf dem Simulationsgerät vorhandenen Software-Komponenten können ein Lizenzmechanismus und/oder eine weitere Simulationsumgebung und/oder eine Datenbank sein. Ein Lizenzmechanismus kann dabei von dem Modell benötigte Lizenzen bereitstellen, z.B. in der Form eines (lokalen) Lizenzservers. Die Datenbanken können Informationen bereitstellen, die das Modell zur Ausführung benötigt, z.B. Parameter von zu simulierenden technischen Systemen. Eine weitere Simulationsumgebung bzw. Simulationssoftware kann bereitgestellt werden um Modelle simulieren zu können, die spezielle, nicht auf dem Simulationsgerät vorhandene, Simulationsumgebungen zur Ausführung benötigen, weil diese Modelle in einer Simulationssprache bzw. Simulationssyntax vorliegen, die von dem Simulationsgerät nicht von vornherein unterstützt wird.

Gemäß einer weiteren Ausführungsform weist das inkompatible Modell des technischen Systems ein vorkompiliertes Modell des technischen Systems auf, das in eine Ausgangs-Container-Einheit eingebettet ist. Die Ausgangs-Container-Einheit ist auch als Ursprungs-Container-Einheit bezeichnet, da sie das Ausgangsformat bei der Erstellung des kompatiblen Modells bildet, wobei die kompatible Container-Einheit das Endprodukt ist, welches auf dem Simulationsgerät ausgeführt wird. Eine solche Ausgangs-Container-Einheit ist ein Format, in dem Modelle bequem zur Verfügung gestellt werden können. Beispielsweise kann das inkompatible Modell des technischen Systems vorkompiliert vorliegen, die Ausgangs-Container-Einheit kann aber leichter verarbeitet werden als ein Kompilat.

Gemäß einer weiteren Ausführungsform ist die Ausgangs-Container-Einheit gemäß einem Schnittstellen-Standard ausgebildet. Durch das Bereitstellen einer standardisierten Schnittstelle kann die Ausgangs-Container-Einheit in der virtuellen Ausführungsumgebung bequem angesprochen werden. Die Tatsache, dass die Ausgangs-Container-Einheit eine standardisierte Schnittstelle hat, stellt keinen Widerspruch dazu dar, dass das vorkompilierte Modell des technischen Systems, welches in der Ausgangs-Container-Einheit eingebettet ist, mit dem Simulations-gerät inkompatibel ist. Die Ausgangs-Container-Einheit kann eine von außen standardisiert ansprechbare Einheit darstellen, die für das vorkompilierte Modell des technischen Systems aber hauptsächlich ein Transport-Vehikel darstellt, aus dem das vorkompilierte Modell des technischen Systems in eine Ausführungsumgebung geladen wird. Je nach Ausführungsumgebung kann das vorkompilierte Modell des technischen Systems dann mit der Ausführungsumgebung inkompatibel sein. Gemäß einer weiteren Ausführungsform kann die Ausgangs-Container-Einheit gemäß dem Functional Mock-up Interface (FMI) Standard ausgebildet sein.

Gemäß einer weiteren Ausführungsform ist das inkompatible Modell des technischen Systems ein Umgebungsmodell für ein Steuergerät. Das inkompatible Modell kann dabei ein Modell eines von dem Steuergerät direkt angesprochenen technischen Systems sein, insbesondere ein Modell eines zu steuernden technischen Systems sein. Es ist aber auch möglich, dass das inkompatible Modell des technischen Systems ein Umgebungsmodell der erweiterten Umgebung des Steuergeräts ist. So kann es z.B. ein Modell eines technischen Systems sein, mit dem das Steuergerät und/oder das zu steuernde technische System interagiert. Es kann auch ein Modell eines noch weiter entfernten technischen Systems sein, das über zwischengeschaltete technische Systeme mit dem Steuergerät und/oder dem zu steuernden technischen System interagiert. Je nach gewünschter Detailtiefe eines Tests können verschiedene Abstufungen von Umgebungsmodellen eingebunden werden.

Beispielhafte Ausführungsformen der Erfindung umfassen weiterhin ein Verfahren zum Testen eines Steuergeräts oder eines Steuergerätmodells mit einem Simulationsgerät, wobei das Steuergerät bzw. das Steuergerätmodell mit einem auf dem Simulationsgerät vorhandenen kompatiblen Modell eines technischen Systems interagiert, wobei das Verfahren die folgenden Schritte aufweist: (a) Ausführen des kompatiblen Modells auf dem Simulationsgerät, wobei das kompatible Modell eine kompatible Container-Einheit ist, in die ein mit dem Simulationsgerät inkompatibles Modell des technischen Systems und eine virtuelle Ausführungsumgebung eingebettet sind, (b) Ansprechen des kompatiblen Modells durch das Steuergerät oder das Steuergerätmodell mittels Schnittstellenaufrufen, die an die kompatible Container-Einheit gerichtet sind, und (c) Umsetzen der Schnittstellenaufrufe in angepasste Schnittstellenaufrufe, wobei die virtuelle Ausführungsumgebung das inkompatible Modell des technischen Systems mittels der angepassten Schnittstellenaufrufe anspricht.

Das erfindungsgemäße Verfahren zum Testen eines Steuergeräts oder Steuergerätmodells ermöglicht das nahtlose Ansprechen eines ursprünglich inkompatiblen Modells eines technischen Systems während der Simulation. Durch das Umsetzen der Schnittstellenaufrufe in angepasste Schnittstellenaufrufe für die virtuelle Ausführungsumgebung kann das Simulationsgerät das ursprünglich inkompatible Modell so ansprechen, als wäre es ein von vornherein kompatibles Modell. Das Simulationsgerät kann ohne besondere Anpassung in gewohnter Weise einen Test durchführen. Dabei ist es möglich, dass das Verfahren sowohl beim Testen eines Steuergeräts, d.h. beim Testen einer gerätemäßigen Implementierung einer Steuerung, z.B. im Rahmen einer HIL-Simulation, als auch beim Testen eines Steuergerätmodells, d.h. beim Testen eines Software-Modells einer Steuerung, z.B. im Rahmen eines RCP-Tests, zur Anwendung kommt.

Gemäß einer weiteren Ausführungsform weist Schritt (c) das Umsetzen der Schnittstellenaufrufe in angepasste Schnittstellenaufrufe mittels einer Schnittstellenbrücke zwischen der kompatiblen Container-Einheit und der virtuellen Ausführungsumgebung auf. Auf diese Weise kann eine effektive Ankopplung zwischen der Außenschnittstelle der virtuellen Ausführungsumgebung und der Innenschnittstelle der kompatiblen Container-Einheit bereitgestellt werden.

Gemäß einer weiteren Ausführungsform weist das Verfahren weiterhin die folgenden Schritte auf: (d) Ansprechen des Steuergeräts bzw. des Steuergerätmodells durch das inkompatible Modell mittels zweiter Schnittstellenaufrufen, die an die virtuelle Ausführungsumgebung gerichtet sind; und (e) Umsetzen der zweiten Schnittstellenaufrufe in zweite angepasste Schnittstellenaufrufe, wobei die kompatible Container-Einheit das Steuergerät bzw. das Steuergerätmodell mittels der zweiten angepassten Schnittstellenaufrufe anspricht. Auf diese Weise kann das inkompatible Modell das Steuergerät bzw. das Steuergerätmodell auf die dem inkompatiblen Modell inhärente Weise ansprechen, wobei die Kompatibilität zu dem Steuergerät bzw. Steuergerätmodell wiederum durch die Umsetzung der Schnittstellenaufrufe bereitgestellt wird. Die zweiten angepassten Schnittstellenaufrufe sind mit dem Simulationsgerät kompatibel und ermöglichen so die Interaktion mit auf dem Simulationsgerät vorhandenen Modellen sowie mit an das Simulationsgerät angeschlossenen Geräten, wie z.B. Steuergeräten oder zu steuernden technischen Systemen.

Gemäß einer weiteren Ausführungsform weist Schritt (e) das Umsetzen der zweiten Schnittstellenaufrufe in zweite angepasste Schnittstellenaufrufe mittels einer Schnittstellenbrücke zwischen der virtuellen Ausführungsumgebung und der kompatiblen Container-Einheit aufweist. Die hier genannte Schnittstellenbrücke kann eine zu der oben bezüglich Schritt (c) diskutierten Schnittstellenbrücke zusätzliche Schnittstellenbrücke sein. Es ist auch möglich, dass es sich um dieselbe Schnittstellenbrücke handelt, welche dann bidirektional ausgebildet ist.

Generell wird hiermit offenbart, dass die zusätzlichen Merkmale, Modifikationen und Effekte, welche oben mit Bezug auf das Verfahren zum Erstellen eines mit einem Simulationsgerät kompatiblen Modells eines technischen Systems beschrieben worden sind, analog für das Verfahren zum Testen eines Steuergeräts oder eines Steuergerätmodells mit einem Simulationsgerät gelten und darauf analog anwendbar sind. Insbesondere sind die folgenden Ausführungsformen für das Verfahren zum Testen eines Steuergeräts oder eines Steuergerätmodells mit einem Simulationsgerät explizit dargelegt.

Erfindungsgemäß ist die kompatible Container-Einheit gemäß einem Schnittstellen-Standard, insbesondere gemäß dem Functional Mock-up Interface (FMI) Standard, ausgebildet.

Gemäß einer weiteren Ausführungsform weist das inkompatible Modell des technischen System ein vorkompiliertes Modell des technischen Systems auf, das in eine Ausgangs-Container-Einheit eingebettet ist.

Gemäß einer weiteren Ausführungsform ist die Ausgangs-Container-Einheit gemäß einem Schnittstellen-Standard, insbesondere gemäß dem Functional Mock-up Interface (FMI) Standard, ausgebildet.

Erfindungsgemäß

ist das kompatible Modell des technischen Systems ein Umgebungsmodell für ein Steuergerät, insbesondere ein Modell eines zu steuernden technischen Systems.

Beispielhafte Ausführungsformen der Erfindung umfassen weiterhin eine mit einem Simulationsgerät kompatible Container-Einheit, wobei das Simulationsgerät ein für die Steuergerätentwicklung eingerichtetes Simulationsgerät ist und wobei die kompatible Container-Einheit ein kompatibles Modell eines technischen Systems bildet, das auf dem Simulationsgerät ausführbar ist, wobei die kompatible Container-Einheit enthält: ein mit dem Simulationsgerät inkompatibles Modell des technischen Systems, und eine virtuelle Ausführungsumgebung, in der das inkompatible Modell des technischen Systems ausführbar ist, wobei das inkompatible Modell des technischen Systems über die kompatible Container-Einheit und die virtuelle Ausführungsumgebung auf dem Simulationsgerät ansprechbar ist. Die zusätzlichen Merkmale, Modifikationen und Effekte, welche oben mit Bezug auf das Verfahren zum Erstellen eines mit einem Simulationsgerät kompatiblen Modells eines technischen Systems und mit Bezug auf das Verfahren zum Testen eines Steuergeräts oder eines Steuergerätmodells mit einem Simulationsgerät beschrieben worden sind, gelten analog für die mit einem Simulationsgerät kompatible Container-Einheit und sind darauf analog anwendbar.

Weitere beispielhafte Ausführungsformen werden mit Bezug auf die beiliegenden Figuren beschrieben.
Fig. 1 zeigt ein Simulationsgerät mit einem daran angeschlossenen, zu testenden Steuergerät in einem Blockdiagramm, wobei das Simulationsgerät zum Ausführen eines Verfahrens zum Testen eines Steuergeräts gemäß beispielhafter Ausführungsformen der Erfindung ausgebildet ist;
Fig. 2 zeigt ein kompatibles Modell eines technischen Systems gemäß einer beispielhaften Ausführungsform der Erfindung in einem Blockdiagramm, wobei das kompatible Modell das Ergebnis eines Verfahrens zum Erstellen eines mit einem Simulationsgerät kompatiblen Modells gemäß beispielhafter Ausführungsformen der Erfindung ist;
Fig. 3 veranschaulicht den Datenfluss in einem kompatiblen Modell eines technischen Systems gemäß einer beispielhaften Ausführungsform der Erfindung in einem Blockdiagramm.

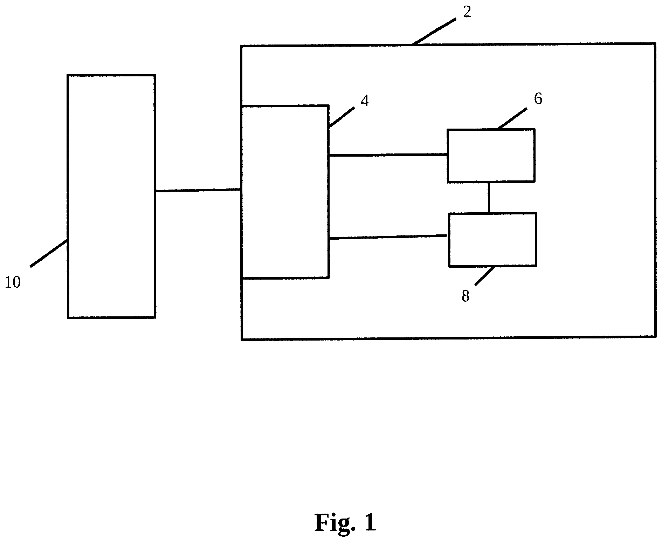

Fig. 1 zeigt ein Simulationsgerät 2, welches im vorliegenden Fall ein HIL-Simulator 2 ist. Der HIL-Simulator 2 hat eine physikalische Schnittstelle 4, über die externe Geräte an den HIL-Simulator 2 anschließbar sind. In Fig. 1 ist ein Motorsteuergerät 10 an die physikalische Schnittstelle 4 angeschlossen. Der HIL-Simulator 2 ist zum Testen des Motorsteuergeräts 10 eingerichtet.

Der HIL-Simulator 2 beinhaltet ein Modell 6 eines Motors. Das Modell 6 des Motors ist ein Modell eines zu steuernden Systems. Insbesondere ist das Modell 6 des Motors ein Modell des von dem Motorsteuergerät 10 zu steuernden technischen Systems. Das Modell 6 des Motors liegt als Software-Modell vor und kann mit der physikalischen Schnittstelle 4 Daten austauschen. So ergibt sich eine Datenverbindung zwischen dem Motorsteuergerät 10 und dem Modell 6 des Motors, wodurch die Interaktion dieser beiden Komponenten simuliert und getestet werden kann. Dabei übernimmt die physikalische Schnittstelle 4 den Übergang zwischen den von und zu dem Steuergerät übertragenen physikalischen Signalen und den innerhalb des HIL-Simulators 2 ausgetauschten logischen, d.h. Softwarebasierten, Signalen.

Weiterhin beinhaltet der HIL-Simulator 2 ein Modell 8 eines Getriebes. Das Modell 8 des Getriebes ist ebenfalls in den Test des Motorsteuergeräts 10 eingebunden. Somit wird das Motorsteuergerät 10 in Interaktion mit dem Modell 6 des Motors und weiter in Interaktion mit dem Modell 8 des Getriebes getestet. Das Modell 8 des Getriebes ist mit dem Modell 6 des Motors verbunden sowie über die physikalische Schnittstelle 4 mit dem Motorsteuergerät 10 verbunden. Somit können Wechselwirkungen zwischen Getriebe und Motor simuliert werden, und die in der Realität oftmals vorhandene Kopplung zwischen Getriebe und Motorsteuergerät kann abgebildet werden. Auf diese Weise ist ein realistischerer und umfassenderer Test der Motorsteuergeräts 10 möglich, als wenn das Modell 8 des Getriebes nicht vorhanden wäre. Zur möglichst klaren Illustration einer beispielhaften Ausführungsform der Erfindung ist lediglich die Interaktion von Motorsteuergerät 10, Motor und Getriebe in Fig. 1 gezeigt. Es ist für den Fachmann jedoch ersichtlich, dass weitere Modelle technischer Systeme in dem HIL-Simulator vorhanden sein können, die mit dem Motorsteuergerät 10 und/oder mit den schon beschriebenen Modellen interagieren können.

An Stelle des Motorsteuergeräts 10 kann auch ein Modell der Motorsteuerung vorhanden sein. In diesem Fall kann die Interaktion von Motorsteuerung, Motor und Getriebe an Hand von Modellen aller drei Komponenten simuliert werden. Es ist weiterhin möglich, dass Modelle von Motorsteuerung und Getriebe vorliegen und deren Verhalten bei Anschluss an einen realen Motor getestet werden.

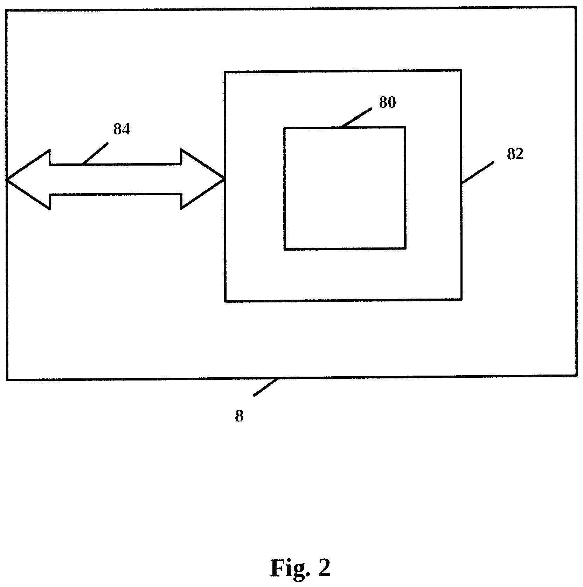

Fig. 2 zeigt das Modell 8 des Getriebes, welches in dem HIL-Simulator der Fig. 1 vorgesehen ist, in einem Blockdiagramm mit weiteren Details. Das Modell 8 des Getriebes ist ein mit dem Simulationsgerät 2 kompatibles Modell eines technischen Systems. Als kompatibles Modell ist das Modell 8 des Getriebes auf dem Simulationsgerät 2, d.h. auf dem HIL-Simulator 2, ausführbar. Das Betriebssystem 2 des HIL-Simulators 2 kann das kompatible Modell 8 des Getriebes ansprechen und ohne Weiteres mit ihm interagieren. Das kompatible Modell 8 des Getriebes enthält eingekapselte Komponenten, wie im Folgenden beschrieben wird. Daher kann das kompatible Modell 8 des Getriebes auch als eine kompatible Container-Einheit beschrieben und bezeichnet werden.

Das kompatible Modell 8 des Getriebes weist ein mit dem Simulationsgerät 2 inkompatibles Modell 80 des Getriebes auf. Das inkompatible Modell 80 des Getriebes ist insofern mit dem Simulationsgerät 2 inkompatibel, als es nicht auf dem Simulationsgerät 2 ausgeführt werden kann. Das inkompatible Modell 80 des Getriebes ist ein vorkompiliertes Modell, das für ein anderes Betriebssystem als das Betriebssystem des Simulationsgeräts 2 kompiliert worden ist. Die virtuelle Ausführungsumgebung wird auch als Laufzeitplattform für das inkompatible Modell des technischen Systems bezeichnet. Demgegenüber ist das Simulationsgerät bzw. das Betriebssystem des Simulationsgeräts die Zielplattform, auf der das kompatible Modell des technischen Systems angesprochen wird.

Das kompatible Modell 8 des Getriebes weist weiterhin eine virtuelle Ausführungsumgebung 82 auf, in der das inkompatible Modell 80 des Getriebes ausführbar ist. Aus Sicht des inkompatiblen Modells 80 des Getriebes verhält sich die virtuelle Ausführungsumgebung 82 wie Hardware, auf der das vorkompilierte Modell ausführbar ist. Die virtuelle Ausführungsumgebung 82 ist aber eine Software, die eine solche kompatible Hardware für das inkompatible Modell 80 emuliert. Diese Software wiederum läuft auf dem Simulationsgerät 2. Dazu kann die virtuelle Ausführungsumgebung 82 die Ressourcen des Simulationsgeräts, insbesondere den bzw. die Prozessor(en) und den Speicher des Simulationsgeräts, nutzen.

Das kompatible Modell 8 des Getriebes weist weiterhin eine Schnittstellen-Brücke 84 auf. Im vorliegenden Beispiel ist die Schnittstellen-Brücke 84 bidirektional. Die Schnittstellenbrücke 84 ist ein Beispiel für eine Struktur, die die Kommunikation zwischen der virtuellen Ausführungsumgebung 82 und den anderen Komponenten des Simulationsgeräts 2, wie z.B. dem Modell 6 des Motors und der physikalischen Schnittstelle 4 ermöglicht. Die Schnittstellen-Brücke 84 verbindet die Außenschnittstelle der virtuellen Ausführungsumgebung 82 mit der Innenschnittstelle des kompatiblen Modells 8 des Getriebes. Über diese Innenschnittstelle ist weiterhin die Kommunikation des kompatiblen Modells 8 des Getriebes nach außen möglich.

Das kompatible Modell 8 des Getriebes kann beispielsweise auf die folgende Weise erstellt werden. Das inkompatible Modell 80 des Getriebes wird bereitgestellt. Beispielsweise kann das inkompatible Modell 80 des Getriebes aus einer Datenbank vorhandener, vorkompilierter Modelle abgerufen bzw. geladen werden. Die virtuelle Ausführungsumgebung 82 wird bereitgestellt. Damit das inkompatible Modell 80 des Getriebes mit der Ausführungsumgebung verknüpft ist und in dieser ausgeführt werden kann, kann das inkompatible Modell 80 des Getriebes beispielsweise mit einem Import-Tool in die virtuelle Ausführungsumgebung 82 geladen werden. Das inkompatible Modell 80 des Getriebes und die virtuelle Ausführungsumgebung 82 werden in eine kompatible Container-Einheit eingekapselt, welche das kompatible Modell 8 des Getriebes darstellt. Dabei wird die Schnittstellen-Brücke 84 vorgesehen, die für die spätere Simulation ein Umsetzen von Schnittstellenaufrufen von/nach außerhalb des kompatiblen Modells 8 des Getriebes und Schnittstellenaufrufen zu/von dem inkompatiblen Modell 80 des Getriebes ermöglicht, wobei die zweitgenannten Schnittstellenaufrufe von der virtuellen Ausführungsumgebung 82 verarbeitbar sind.

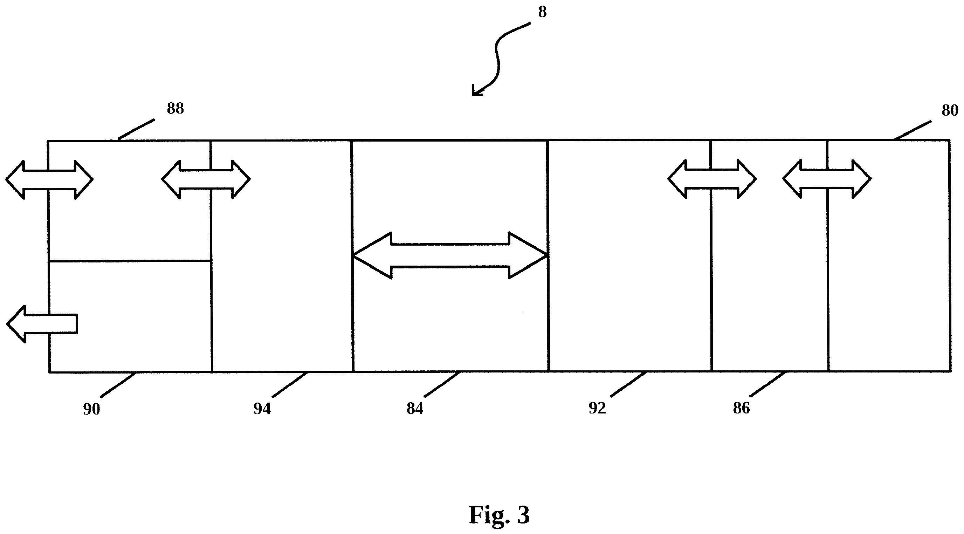

Fig. 3 veranschaulicht den Datenfluss in dem kompatiblen Modell 8 des Getriebes, wie er während eines Tests eines Steuergeräts beispielsweise erfolgen kann, in einem Blockdiagramm. Die Gesamtheit der Blöcke der Fig. 3 stellt das kompatible Modell 8 des Getriebes dar. An dem "hinteren" Ende des Datenflusses befindet sich das inkompatible Modell 80 des Getriebes. Das inkompatible Modell 80 des Getriebes besteht aus einer Ausgangs-Container-Einheit, in die das vorkompilierte Modell eingebettet ist. Die Ausgangs-Container-Einheit ist nach dem Functional Mock-up Interface Standard ausgebildet bzw. organisiert. Gemäß diesem Standard hat die Ausgangs-Container-Einheit eine Schnittstelle für Schnittstellenaufrufe sowie eine hochsprachige Beschreibung der Schnittstellen und der für die Umgebung bedeutsamen inneren Parameter des eingebetteten Modells. In dem Beispiel des Getriebes ist ein solcher innerer Parameter z.B. der eingelegte Gang. Über die Schnittstelle der Ausgangs-Container-Einheit kommuniziert das inkompatible Modell 80 mittels angepasster Schnittstellenaufrufe 86, wie unten beschrieben wird.

Die genannte hochsprachige Beschreibung der Schnittstellen und Parameter des inkompatiblen Modells 80 ist auch an dem "vorderen" Ende des kompatiblen Modells 8 des Getriebes vorgesehen. Dort ist diese hochsprachige Beschreibung der Schnittstellen und Parameter mit Bezugszeichen 90 versehen. Bei der Erstellung des kompatiblen Modells 8 des Getriebes wird die hochsprachige Beschreibung der Schnittstellen und Parameter 90 aus der Ausgangs-Container-Einheit, die das inkompatible Modell 80 des Getriebes bildet, in das kompatible Modell 8 des Getriebes kopiert. Auf diese Weise sind für die anderen Komponenten des Simulationsgeräts 2 die Schnittstellen und Parameter in hochsprachiger Beschreibung ersichtlich.

Des weiteren kommuniziert das kompatible Modell 8 des Getriebes mit den anderen Komponenten des Simulationsgeräts 2 über Schnittstellenaufrufe 88. Die Schnittstellenaufrufe 88 sind derart, dass sie mit den weiteren Komponenten des Simulationsgeräts 2 kompatibel sind und auf dem Simulationsgerät 2 verarbeitbar sind. Das kompatible Modell 8 des Getriebes ist auch nach dem Functional Mock-up Interface Standard ausgebildet. An seinem "vorderen" Ende weist das kompatible Modell 8 des Getriebes die beschriebene Schnittstelle für Schnittstellenaufrufe 88 sowie die beschriebene hochsprachige Beschreibung der Schnittstellen und Parameter 90 auf.

Zur Umsetzung von Schnittstellenaufrufen 88 und angepassten Schnittstellenaufrufen 86 ist die Schnittstellen-Brücke 84 vorgesehen. Die angepassten Schnittstellenaufrufe 86 sind als angepasst bezeichnet, um sie von den Schnittstellenaufrufen 88 zu unterscheiden und um zum Ausdruck zu bringen, dass sie gegenüber den vom Simulationsgerät 2 verarbeitbaren Schnittstellenaufrufen modifiziert sind, so dass sie von dem inkompatiblen Modell 80 des Getriebes verarbeitet werden können. Je nach Datenflussrichtung können auch die Schnittstellenaufrufe 88 als angepasste Schnittstellenaufrufe für von dem inkompatiblen Modell 80 ausgehende Schnittstellenaufrufe bezeichnet werden.

Die Schnittstellen-Brücke 84 ist von einer ersten Hüllfunktion 92 und einer zweiten Hüllfunktion 94 umgeben. Die erste Hüllfunktion 92 und die zweite Hüllfunktion 94 haben die Aufgabe, die Schnittstellenaufrufe 88 sowie die angepassten Schnittstellenaufrufe 86 so einzupacken bzw. auszupacken, dass sie nach dem Einpacken in einem definierten Format von der Schnittstellen-Brücke 84 verarbeitet werden können bzw. nach dem Auspacken in dem von dem inkompatiblen Modell 80 des Getriebes bzw. von der Umgebung des kompatiblen Modells 8 des Getriebes erwarteten Format sind. In der Schnittstellen-Brücke 84 findet die Umsetzung bzw. Transformation zwischen den Schnittstellenaufrufen 88, die von dem Simulationsgerät 2 und dem kompatiblen Modell 8 des Getriebes verarbeitbar sind, und den Schnittstellenaufrufen 86, die von dem inkompatiblen Modell 80 verarbeitbar sind, statt. Somit ist den Datenfluss aus Fig. 3 ein Beispiel, wie eine nahtlose Interaktion zwischen dem Simulationsgerät 2 und dem ursprünglich inkompatiblen Modell 80 eines technischen Systems ermöglicht wird.

Es wird betont, dass der Bezug auf ein Getriebe rein beispielhaft ist und lediglich zur Veranschaulichung gewählt worden ist. Die beschriebene Einkapselung eines inkompatiblen Modells eines technischen Systems und die damit erreichbare Möglichkeit der nahtlosen Interaktion mit dem ursprünglich inkomaptiblen Modell ist von dem spezifischen technischen System, das modelliert ist, unabhängig.

Die Schnittstellenaufrufe 88 und die angepassten Schnittstellenaufrufe 86 können Application Programming Interface (API) Schnittstellenaufrufe sein. Die Schnittstellen-Brücke 84 kann auch als Mittel zur Synchronisation der Schnittstellenaufrufe angesehen werden. Weiterhin kann in der Schnittstellen-Brücke 84 eine Optimierung der Interaktion stattfinden. Zum Beispiel können mit Hilfe eines internen Zwischenspeichers zusammengehörige Schnittstellenaufrufe gebündelt werden, die dann zur gemeinsamen Verarbeitung an die virtuelle Ausführungsumgebung bzw. an das Simulations-gerät weitergereicht werden.

## Patentansprüche

1. Verfahren zum Erstellen eines mit einem Simulationsgerät (2) kompatiblen Modells (8) eines technischen Systems, wobei das Simulationsgerät (2) ein für die Steuergerätentwicklung eingerichteter Hardware-in-the-Loop-Simulator, HIL-Simulator, ist, an den ein zu testendes Steuergerät (10) anschliessbar ist, und wobei das kompatible Modell (8) auf dem Simulationsgerät (2) ausführbar ist, wobei das Verfahren die folgenden Schritte aufweist:
(a) Bereitstellen eines mit dem HIL-Simulator (2) inkompatiblen Modells (80) des technischen Systems, wobei das inkompatible Modell (80) des technischen Systems ein vorkompiliertes Modell des technischen Systems aufweist und wobei das inkompatible Modell (80) des technischen Systems ein Umgebungsmodell für das zu testende Steuergerät (10) ist, wobei das Umgebungsmodell ein Modell eines zu steuernden technischen Systems ist;
(b) Bereitstellen einer virtuellen Ausführungsumgebung (82), wobei das mit dem HIL-Simulator (2) inkompatible Modell (80) des technischen Systems in der virtuellen Ausführungsumgebung (82) ausführbar ist; und
(c) Einkapseln des mit dem HIL-Simulator (2) inkompatiblen Modells (80) des technischen Systems und der virtuellen Ausführungsumgebung (82) in eine kompatible Container-Einheit, die das kompatible Modell (8) des technischen Systems bildet, wobei das inkompatible Modell (80) des technischen Systems über die kompatible Container-Einheit und die virtuelle Ausführungsumgebung (82) auf dem HIL-Simulator (2) ansprechbar ist, wobei die kompatible Container-Einheit gemäß dem Functional Mock-up Interface, FMI, Standard ausgebildet ist.

2. Verfahren nach Anspruch 1, wobei das Einkapseln in die kompatible Container-Einheit ein Koppeln der kompatiblen Container-Einheit und der virtuellen Ausführungsumgebung (82) mittels einer Schnittstellen-Brücke (84) umfasst.

3. Verfahren nach einem der vorhergehenden Ansprüche, wobei die virtuelle Ausführungsumgebung (82) ein Betriebssystem umfasst, auf dem das mit dem HIL-Simulator (2) inkompatible Modell (80) des technischen Systems ausführbar ist, wobei die virtuelle Ausführungsumgebung vorzugsweise weiterhin einen Prozessor und/oder ein Speichermedium und/oder einen lokalen Lizenzserver aufweist.

4. Verfahren nach einem der vorhergehenden Ansprüche, wobei das vorkompilierte Modell des technischen Systems in eine Ausgangs-Container-Einheit eingebettet ist.

5. Verfahren nach Anspruch 4, wobei die Ausgangs-Container-Einheit gemäß einem Schnittstellen-Standard, insbesondere gemäß dem Functional Mock-up Interface (FMI) Standard, ausgebildet ist.

6. Verfahren zum Testen eines Steuergeräts (10) mit einem Hardware-in-the-Loop-Simulator, HIL-Simulator, (2), wobei das Steuergerät (10) mit einem auf dem HIL-Simulator (2) vorhandenen kompatiblen Modell (8) eines technischen Systems interagiert,
wobei das Verfahren die folgenden Schritte aufweist:
(a) Ausführen des kompatiblen Modells (8) auf dem HIL-Simulator (2), wobei das kompatible Modell (8) eine kompatible Container-Einheit ist, in die ein mit dem HIL-Simulator (2) inkompatibles Modell (80) des technischen Systems und eine virtuelle Ausführungsumgebung (82) eingebettet sind, wobei das inkompatible Modell (80) des technischen Systems ein vorkompiliertes Modell des technischen Systems aufweist und wobei das inkompatible Modell (80) des technischen Systems ein Umgebungsmodell für das Steuergerät (10) ist, wobei das Umgebungsmodell ein Modell eines zu steuernden technischen Systems ist;
(b) Ansprechen des kompatiblen Modells (8) durch das Steuergerät (10) mittels Schnittstellenaufrufen (88), die an die kompatible Container-Einheit gerichtet sind, wobei die kompatible Container-Einheit gemäß dem Functional Mock-up Interface, FMI, Standard ausgebildet ist; und
(c) Umsetzen der Schnittstellenaufrufe (88) in angepasste Schnittstellenaufrufe (86), wobei die virtuelle Ausführungsumgebung (82) das inkompatible Modell (80) des technischen Systems mittels der angepassten Schnittstellenaufrufe (86) anspricht.

7. Verfahren nach Anspruch 6, wobei Schritt (c) das Umsetzen der Schnittstellenaufrufe (88) in angepasste Schnittstellenaufrufe (86) mittels einer Schnittstellenbrücke (84) zwischen der kompatiblen Container-Einheit und der virtuellen Ausführungsumgebung (82) aufweist.

8. Verfahren nach Anspruch 6 oder 7, weiterhin aufweisend die Schritte:
(d) Ansprechen des Steuergeräts (10) durch das inkompatible Modell (80) mittels zweiter Schnittstellenaufrufen, die an die virtuelle Ausführungsumgebung (82) gerichtet sind; und
(e) Umsetzen der zweiten Schnittstellenaufrufe in zweite angepasste Schnittstellenaufrufe, wobei die kompatible Container-Einheit das Steuergerät (10) mittels der zweiten angepassten Schnittstellenaufrufe anspricht.

9. Verfahren nach Anspruch 8, wobei Schritt (e) das Umsetzen der zweiten Schnittstellenaufrufe in zweite angepasste Schnittstellenaufrufe mittels einer Schnittstellenbrücke zwischen der virtuellen Ausführungsumgebung und der kompatiblen Container-Einheit aufweist.

10. Verfahren nach einem der Ansprüche 6 bis 9, wobei das vorkompilierte Modell des technischen Systems in eine Ausgangs-Container-Einheit eingebettet ist.

11. Mit einem Hardware-in-the-Loop-Simulator, HIL-Simulator, (2) kompatible Container-Einheit, wobei der HIL-Simulator (2) für die Steuergerätentwicklung eingerichtet ist, wobei an den HIL-Simulator (2) ein zu testendes Steuergerät (10) anschliessbar ist und wobei die kompatible Container-Einheit ein kompatibles Modell (8) eines technischen Systems bildet, das auf dem HIL-Simulator (2) ausführbar ist,
wobei die kompatible Container-Einheit enthält:
ein mit dem HIL-Simulator (2) inkompatibles Modell (80) des technischen Systems, wobei das inkompatible Modell (80) des technischen Systems ein vorkompiliertes Modell des technischen Systems aufweist und wobei das inkompatible Modell (80) des technischen Systems ein Umgebungsmodell für das Steuergerät (10) ist, wobei das Umgebungsmodell ein Modell eines zu steuernden technischen Systems ist, und
eine virtuelle Ausführungsumgebung (82), in der das inkompatible Modell (80) des technischen Systems ausführbar ist,
wobei das inkompatible Modell (80) des technischen Systems über die kompatible Container-Einheit und die virtuelle Ausführungsumgebung (82) auf dem HIL-Simulator (2) ansprechbar ist,
wobei die kompatible Container-Einheit gemäß dem Functional Mock-up Interface, FMI, Standard ausgebildet ist.

## Claims

1. Method for creating a model (8) of a technical system which is compatible with a simulation device (2), wherein the simulation device (2) is a hardware-in-the-loop simulator, HIL simulator, which is set up for control unit development and to which a control unit (10) to be tested can be connected, and wherein the compatible model (8) can be executed on the simulation device (2),
the method comprising the following steps:
(a) providing a model (80) of the technical system that is incompatible with the HIL simulator (2), wherein the incompatible model (80) of the technical system comprises a precompiled model of the technical system and wherein the incompatible model (80) of the technical system is an environment model for the control unit (10) to be tested, wherein the environment model is a model of a technical system to be controlled;
(b) providing a virtual execution environment (82), wherein the technical system model (80) incompatible with the HIL simulator (2) is executable in the virtual execution environment (82); and
(c) encapsulating the technical system model (80) incompatible with the HIL simulator (2) and the virtual execution environment (82) in a compatible container unit forming the compatible technical system model (8), wherein the incompatible model (80) of the technical system is addressable on the HIL simulator (2) via the compatible container unit and the virtual execution environment (82), wherein the compatible container unit is formed according to the Functional Mock-up Interface, FMI, standard.

2. The method of claim 1, wherein encapsulating in the compatible container unit comprises coupling the compatible container unit and the virtual execution environment (82) by means of an interface bridge (84).

3. Method according to any one of the preceding claims, wherein the virtual execution environment (82) comprises an operating system on which the model (80) of the technical system incompatible with the HIL simulator (2) is executable, wherein the virtual execution environment preferably further comprises a processor and/or a storage medium and/or a local license server.

4. The method of any one of the preceding claims, wherein the precompiled model of the engineered system is embedded in an output container unit.

5. The method of claim 4, wherein the output container unit is formed according to an interface standard, in particular according to the Functional Mock-up Interface (FMI) standard.

6. A method of testing a control unit (10) with a hardware-in-the-loop simulator, HIL simulator, (2) wherein the control unit (10) interacts with a compatible model (8) of an engineering system present on the HIL simulator (2),
the method comprising the steps of:
(a) executing the compatible model (8) on the HIL simulator (2), wherein the compatible model (8) is a compatible container unit in which a model (80) of the technical system incompatible with the HIL simulator (2) and a virtual execution environment (82) are embedded, wherein the incompatible technical system model (80) comprises a precompiled technical system model, and wherein the incompatible technical system model (80) is an environment model for the controller (10), the environment model being a model of a technical system to be controlled;
(b) addressing the compatible model (8) by the controller (10) with interface calls (88) directed to the compatible container unit, wherein the compatible container unit is formed according to the Functional Mock-up Interface, FMI, standard; and
(c) converting the interface calls (88) into customized interface calls (86), wherein the virtual execution environment (82) addresses the incompatible model (80) of the technical system by means of the customized interface calls (86).

7. The method of claim 6, wherein step (c) comprises converting the interface calls (88) into customized interface calls (86) using an interface bridge (84) between the compatible container unit and the virtual execution environment (82).

8. The method of claim 6 or 7, further comprising the steps of:
(d) addressing the controller (10) by the incompatible model (80) using second interface calls directed to the virtual execution environment (82); and
(e) converting the second interface calls into second customized interface calls, wherein the compatible container unit addresses the control unit (10) by means of the second customized interface calls; and(f) converting the second customized interface calls into second customized interface calls.

9. The method of claim 8, wherein step (e) comprises converting the second interface calls to second customized interface calls using an interface bridge between the virtual execution environment and the compatible container unit.

10. The method of any one of claims 6 to 9, wherein the precompiled model of the engineered system is embedded in an output container unit.

11. Container unit compatible with a hardware-in-the-loop simulator, HIL simulator, (2), wherein the HIL simulator (2) is set up for control unit development, wherein a control unit (10) to be tested can be connected to the HIL simulator (2) and wherein the compatible container unit forms a compatible model (8) of a technical system which can be executed on the HIL simulator (2),
wherein the compatible container unit comprises
an incompatible model (80) of the technical system with the HIL simulator (2), wherein the incompatible model (80) of the technical system comprises a precompiled model of the technical system and wherein the incompatible model (80) of the technical system is an environment model for the controller (10), the environment model being a model of a technical system to be controlled, and
a virtual execution environment (82) in which the incompatible model (80) of the technical system is executable,
wherein the incompatible model (80) of the technical system is addressable on the HIL simulator (2) via the compatible container unit and the virtual execution environment (82), wherein the compatible container unit is designed according to the Functional Mock-up Interface, FMI, standard.
wherein the incompatible model (80) of the technical system is addressable via the compatible container unit and the virtual execution environment (82) on the HIL simulator (2), wherein the compatible container unit is formed according to the Functional Mock-up Interface, FMI, standard.

## Revendications

1. Procédé de création d'un modèle (8) d'un système technique compatible avec un dispositif de simulation (2), dans lequel le dispositif de simulation (2) est un simulateur Hardware-in-the-Loop, simulateur HIL, conçu pour le développement de dispositifs de commande, auquel un dispositif de commande (10) à tester peut être connecté, et dans lequel le modèle compatible (8) peut être exécuté sur le dispositif de simulation (2),
dans lequel le procédé comprend les étapes suivantes :
(a) fournir un modèle (80) du système technique qui est incompatible avec le simulateur HIL (2), dans lequel le modèle incompatible (80) du système technique comprend un modèle précompilé du système technique et dans lequel le modèle incompatible (80) du système technique est un modèle d'environnement pour le dispositif de commande (10) à tester, dans lequel le modèle d'environnement est un modèle d'un système technique à contrôler ;
(b) fournir un environnement d'exécution virtuel (82), dans lequel le modèle de système technique (80) incompatible avec le simulateur HIL (2) est exécutable dans l'environnement d'exécution virtuel (82) ; et
(c) encapsuler le modèle de système technique (80) incompatible avec le simulateur HIL (2) et l'environnement d'exécution virtuel (82) dans une unité de conteneur compatible formant le modèle de système technique compatible (8), dans lequel le modèle incompatible (80) du système technique est adressable sur le simulateur HIL (2) via l'unité de conteneur compatible et l'environnement d'exécution virtuel (82), dans lequel l'unité de conteneur compatible est formée selon la norme Functional Mock-up Interface, FMI.

2. Procédé de la revendication 1, dans lequel l'encapsulation dans l'unité conteneur compatible comprend le couplage de l'unité conteneur compatible et de l'environnement d'exécution virtuel (82) au moyen d'un pont d'interface (84).

3. Procédé selon l'une quelconque des revendications précédentes, dans lequel l'environnement d'exécution virtuel (82) comprend un système d'exploitation sur lequel le modèle (80) du système technique incompatible avec le simulateur HIL (2) est exécutable, dans lequel l'environnement d'exécution virtuel comprend de préférence en outre un processeur et/ou un support de stockage et/ou un serveur de licences local.

4. Procédé de l'une quelconque des revendications précédentes, dans lequel le modèle précompilé du système d'ingénierie est intégré dans une unité de conteneur de sortie.

5. Procédé de la revendication 4, dans lequel l'unité de conteneur de sortie est formée selon une norme d'interface, en particulier selon la norme Functional Mock-up Interface (FMI).

6. Procédé de test d'un dispositif de commande (10) avec un simulateur de matériel dans la boucle, simulateur HIL, (2) dans lequel le dispositif de commande (10) interagit avec un modèle compatible (8) d'un système d'ingénierie présent sur le simulateur HIL (2),
le procédé comprenant les étapes suivantes :
(a) exécuter le modèle compatible (8) sur le simulateur HIL (2), dans lequel le modèle compatible (8) est une unité de conteneur compatible dans laquelle un modèle (80) du système technique incompatible avec le simulateur HIL (2) et un environnement d'exécution virtuel (82) sont intégrés, dans lequel le modèle de système technique incompatible (80) comprend un modèle de système technique précompilé, et dans lequel le modèle de système technique incompatible (80) est un modèle d'environnement pour le dispositif de commande (10), le modèle d'environnement étant un modèle d'un système technique à contrôler ;
(b) adressage du modèle compatible (8) par le dispositif de commande (10) avec des appels d'interface (88) dirigés vers l'unité de conteneur compatible, dans lequel l'unité de conteneur compatible est formée selon la norme Functional Mock-up Interface, FMI, et
(c) convertir les appels d'interface (88) en appels d'interface personnalisés (86), dans lequel l'environnement d'exécution virtuel (82) traite le modèle incompatible (80) du système technique au moyen des appels d'interface personnalisés (86).

7. Procédé de la revendication 6, dans lequel l'étape (c) comprend la conversion des appels d'interface (88) en appels d'interface personnalisés (86) en utilisant un pont d'interface (84) entre l'unité de conteneur compatible et l'environnement d'exécution virtuel (82).

8. Procédé de la revendication 6 ou 7, comprenant en outre les étapes suivantes:
(d) adresser le dispositif de commande (10) par le modèle incompatible (80) en utilisant des seconds appels d'interface dirigés vers l'environnement d'exécution virtuel (82) ; et
(e) convertir les seconds appels d'interface en seconds appels d'interface personnalisés, dans lequel l'unité de conteneur compatible adresse le dispositif de commande (10) en utilisant les seconds appels d'interface personnalisés.

9. Procédé de la revendication 8, dans lequel l'étape (e) comprend la conversion des seconds appels d'interface en seconds appels d'interface personnalisés en utilisant un pont d'interface entre l'environnement d'exécution virtuel et l'unité de conteneur compatible.

10. Procédé de l'une quelconque des revendications 6 à 9, dans lequel le modèle précompilé du système d'ingénierie est intégré dans une unité de conteneur de sortie.

11. Unité de conteneur compatible avec un simulateur Hardware-in-the-Loop, simulateur HIL (2), dans laquelle le simulateur HIL (2) est conçu pour le développement d'unités de commande, dans laquelle un dispositif de commande (10) à tester peut être connectée au simulateur HIL (2) et dans laquelle l'unité de conteneur compatible forme un modèle compatible (8) d'un système technique qui peut être exécuté sur le simulateur HIL (2),
dans lequel l'unité de conteneur compatible comprend
un modèle incompatible (80) du système technique avec le simulateur HIL (2), dans lequel le modèle incompatible (80) du système technique comprend un modèle précompilé du système technique et dans lequel le modèle incompatible (80) du système technique est un modèle d'environnement pour le dispositif de commande (10), le modèle d'environnement étant un modèle d'un système technique à contrôler, et
un environnement d'exécution virtuel (82) dans lequel le modèle incompatible (80) du système technique est exécutable,
dans lequel le modèle incompatible (80) du système technique est adressable sur le simulateur HIL (2) via l'unité de conteneur compatible et l'environnement d'exécution virtuel (82), dans lequel l'unité de conteneur compatible est conçue selon la norme Functional Mock-up Interface, FMI.
dans lequel le modèle incompatible (80) du système technique est adressable via l'unité de conteneur compatible et l'environnement d'exécution virtuel (82) sur le simulateur HIL (2), dans lequel l'unité de conteneur compatible est formée selon la norme Functional Mock-up Interface, FMI.
